# EUROPEAN PATENT SPECIFICATION

(11) **EP 4 500 320 B1**
(45) Date of publication and mention of the grant of the patent: **11.11.2026**
(21) Application number: 23754122.2
(22) Date of filing: 19.07.2023
(51) Int. Cl.: G06F 8/51, G06F 8/76

(54) **METHOD, DEVICE AND PROGRAM CARRIER FOR CROSS-PLATFORM PORTING OF APPLICATIONS**
VERFAHREN, VORRICHTUNG UND PROGRAMMTRÄGER FÜR PLATTFORMÜBERGREIFENDE PORTIERUNG VON ANWENDUNGEN
PROCÉDÉ, DISPOSITIF ET SUPPORT DE PROGRAMME POUR LE PORTAGE INTER-PLATEFORME D'APPLICATIONS

(30) Priority: 19.07.2022 CN 202210848764
(43) Date of publication of application: 05.02.2025
(73) Proprietor: Mercedes-Benz Group AG, 70372 Stuttgart (DE)
(72) Inventor: HU, Hao, Beijing 100102 (CN); WAN, Ming, Beijing 100102 (CN); DUAN, Xuefei, Beijing 100102 (CN)
(74) Representative: Hofstetter, Schurack & Partner
(86) International application number: PCT/CN2023/108057
(87) International publication number: WO 2024/017278

(56) References cited:
- US-A1- 2018 357 055
- EL-KASSAS WAFAA S ET AL: "Enhanced Code Conversion Approach for the Integrated Cross-Platform Mobile Development (ICPMD)", IEEE TRANSACTIONS ON SOFTWARE ENGINEERING, IEEE SERVICE CENTER, LOS ALAMITOS, CA, US, vol. 42, no. 11, 1 November 2016 (2016-11-01), pages 1036 - 1053, XP011633960, ISSN: 0098-5589, [retrieved on 20161110], DOI: 10.1109/TSE.2016.2543223

## Description

### TECHNICAL FIELD

The present disclosure relates to a method for cross-platform porting of applications, a device for cross-platform porting of applications, an application platform, an in-vehicle system, a system for cross-platform porting of applications and a machine-readable program carrier.

### BACKGROUND ART

Nowadays different automotive manufacturers have their own in-vehicle infotainment systems, based on which application programs with diverse services and contents can be provided to vehicle users. However, it takes plenty of time and effort to develop these applications one by one. At the same time, with the rapid development of the mobile Internet, a variety of applications (so-called mobile Apps) have been developed by different content providers in the field of smart mobile devices for the consumers of smart mobile device platforms to use. And currently one of the biggest challenges ahead is how to port these mature applications from a smart mobile device platform to an in-vehicle platform.

In order to port applications from third-party mobile device platforms, or third-party application ecosystems, to in-vehicle platforms, many automotive manufacturers rely on the integration of vehicle operating systems with the Android or iOS operating system, for example, by employing an Android-based vehicle operating system. This solution has the following disadvantages: it requires deep integration of a specific operating system, such as Android system, with the software and hardware of the vehicle; and it also requires changes in hardware, security, etc. to meet the needs of the vehicle. Additionally, extra hardware or hypervisors are also required, often with huge overhead costs. Even if a specific operating system is integrated in the vehicle, usually it is still a must to adjust and adapt, and even completely rewrite, if necessary, each individual native application in order to adapt the application to the operating system and environment of the vehicle. Furthermore, an Android-based in-vehicle operating system is limited to the Android ecosystem, so it cannot be integrated or compatible with other ecosystems.

Cloud-based distributed application system is also proposed in the prior art, which is designed to deploy and host applications centrally in the cloud, and the applications can be run on different types of devices through deployment in the cloud. However, the cloud-based distributed application system also has drawbacks. For example, if one wants to get access to vehicle data resources, the resources have to be first synchronized via the vehicle to a cloud server, which means that the large volume of operation data, such as file reading and writing, during the use by the user also needs to be performed with the help of cloud storage, which causes potential risks in data security and protection of user privacy information. Moreover, cloud-based distributed applications are dependent on the network connection between the terminal device and the cloud or server side, so they cannot function normally when the network is unavailable for the terminal device.

EL-KASSAS WAFAA S ET AL: "Enhanced Code Conversion Approach for the Integrated Cross-Platform Mobile Development (ICPMD)", IEEE TRANSACTIONS ON SOFTWARE ENGINEERING, IEEE SERVICE CENTER, LOS ALAMITOS, CA, US, vol. 42, no. 11, 1 November 2016, pages 1036-1053 discloses porting mobile applications between native platforms, such as converting projects from Windows Phone 8 to Android. Instead of relying on complex abstract syntax tree parsing or manual structural transformations, it utilizes XSLT and Regular Expressions to match source code lines against a database of common functional API patterns. This process generates efficient, native target code that significantly outperforms interpretation or cross-compilation frameworks like Titanium and Xamarin in compiled installation size, active memory footprint, and user interface rendering speeds.

US 2018/357055 A1 discloses the Legacy-to-Container (L2C) computer language migration system, which modernizes monolithic procedural legacy programs like COBOL into microservices-based object-oriented code frameworks. The system functions by parsing the legacy procedural source files to identify and extract global variables and hierarchical sub-elements such as COBOL paragraphs. Via an interactive conversion user interface, users choose specific paragraphs to convert directly into object methods, while the remaining non-selected paragraph blocks automatically become classes. L2C additionally employs dedicated wizards to comment out dead code blocks, optimize relational database schemas, and transcode legacy terminal screen maps into modern HTML5/AngularJS views optimized for cloud container layer deployment.

### SUMMARY OF THE INVENTION

The present invention relates to a method for cross-platform porting of applications, a device for cross-platform porting of applications, an application platform, an in-vehicle system, a system for cross-platform porting of applications and a machine-readable program carrier, and is defined according to the independent claims. Specific embodiments are defined in the dependent claims.

The present disclosure is particularly based on the following technical idea: by porting applications from a mobile terminal that is based on a specific ecosystem to an in-vehicle platform, automobile manufacturers can easily port and deploy rich content and services from a smart mobile device platform through an in-vehicle app store to the in-vehicle platform, without the need to re-develop and re-compile the applications in the in-vehicle platform, and this advantageously reduces the burden on content service providers and developers. At the same time, by performing conversion in the aspect of the user interface and API calls, the dependency of applications on different underlying vehicle operating systems is eliminated or reduced, so that the converted applications can be better used across platforms/operating systems, thereby improving the versatility of applications across platforms/operating systems.

### BRIEF DESCRIPTION OF THE DRAWINGS

The principles, characteristics and advantages of the present disclosure can be better understood by describing the disclosure in greater detail with reference to the accompany drawings, in which:
FIG. 1 shows a block diagram of a device for cross-platform porting of applications according to an exemplary embodiment of the present disclosure;
FIG. 2 shows a block diagram of a system for cross-platform porting of applications according to an exemplary embodiment of the present disclosure;
FIG. 3 shows a flowchart of a method for cross-platform porting of applications according to an exemplary embodiment of the present disclosure;
FIG. 4 shows a schematic diagram of porting an application to an in-vehicle platform by means of an exemplary embodiment of the method according to the present disclosure;
FIG. 5 shows a schematic diagram of porting an application to an in-vehicle platform by means of another exemplary embodiment of the method according to the present disclosure;
FIG. 6 shows a sequence diagram of executing a method for cross-platform porting of applications according to an exemplary embodiment of the present disclosure; and
FIG. 7 shows another sequence diagram of executing a method for cross-platform porting of applications according to an exemplary embodiment of the present disclosure.

### DETAILED DESCRIPTION OF EMBODIMENTS

For a clearer understanding of the technical problems to be solved, technical solutions and advantageous technical effects of the present disclosure, the present disclosure will be further elaborated below in conjunction with the drawings and a number of exemplary embodiments. It is to be understood that the specific embodiments described here are merely for explaining, rather than limiting the scope of protection of the disclosure.

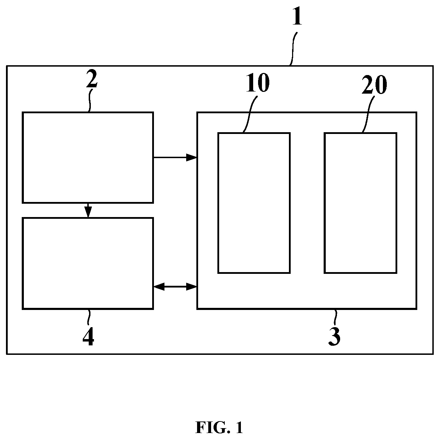

FIG. 1 shows a block diagram of a device for cross-platform porting of applications according to the invention.

In the sense of the present disclosure, applications include, but are not limited to, word processing applications, spreadsheet applications, navigation applications, audio/video playing applications, e-mail applications, database applications, game applications, and information acquisition applications.

As shown in FIG. 1, a device 1 comprises an application conversion module 3. In addition, in this embodiment, the device 1 optionally may further comprise an interface module 2 and a download service module 4.

The interface module 2 may be configured, for example, as or to be connected to a user interface, i.e. UI interface, of an in-vehicle platform and may comprise or be capable of accessing various resource components of the vehicle, such as the screen, speaker, microphone, touch screen and/or keyboard, and based on the user interface, applications that are available on the in-vehicle platform and a list thereof can be presented to the user. The interface module 2 may further comprise a communication interface and be capable of receiving, via communications, a request from the system itself or from outside the system to port an application. For example, such a porting request may be a user-triggered request to download and/or install an application, or a request triggered automatically by the system to pre-convert an application.

The interface module 2 may be connected to the application conversion module 3 in a manner capable of signal transmission. The application conversion module 3 may be configured, for example, as a conversion engine so as to enable conversion of a source-platform-specific application into an application that can be run on an in-vehicle platform (and on other platforms or operating systems different from the source platform). The application that can be run on an in-vehicle platform may, for example, run on the in-vehicle platform independently of the operating system, and it may also be a cross-platform application that can be run on different platforms in a manner independently of the underlying operating system. The conversion of the application may be performed based on a request for porting or conversion, or it may be performed in advance without being based on the request for porting or conversion. The request for porting or conversion may, for example, be initiated in response to a user-initiated request to download and install an application on the in-vehicle platform and/or a user-initiated request to use an application on the in-vehicle platform for the first time, or it may be initiated by the system. The conversion of the application may be performed synchronously or asynchronously. For instance, the application conversion in a synchronous manner may execute the cross-platform conversion of the application upon receiving a user-initiated request to download and install an application on the in-vehicle platform and/or a user-initiated request to use an application on the in-vehicle platform for the first time. And the application conversion in an asynchronous manner may complete the application conversion in advance (for instance, in response to a pre-conversion request of the system) before the user initiates a request to download and install an application on the in-vehicle platform and/or a request to use an application on the in-vehicle platform for the first time; so when the user initiates a request to download and install an application on the in-vehicle platform and/or a request to use an application on the in-vehicle platform for the first time, the (pre-) conversion of the application has already been completed in advance.

In the present disclosure, source-platform-specific applications may be understood as those applications specially developed for any specific mobile terminal platform, such as a smart phone, smart tablet computer, notebook computer, wearable device, etc., and/or for any specific operating system, such as the embedded Linux operating system, Windows operating system, Unix operating system, Android operating system, Mac OS X operating system and iOS operating system, and specific in-vehicle operating systems, etc., and these applications run in dependence on a specific platform and/or specific operating system, so they cannot be run or used directly on another ecosystem, such as on other platforms or other operating systems. According to an embodiment of the present disclosure, cross-platform applications may refer to those applications that can run independently of a specific platform and/or a specific operating system, such as a hybrid App, and these applications are in normal operation without deep integration with a specific platform and/or a specific operating system. As an example, such a cross-platform application may be an application based on web and/or container technologies, for example.

As shown in FIG. 1, the application conversion module 3 may comprise a UI/UX element conversion unit 10 and an API call conversion unit 20. The UI/UX element conversion unit 10 can convert a source-platform-specific user interface (UI/UX) of the application to be converted into a web-based user interface. For instance, the UI/UX element conversion unit 10 may be configured to be capable of converting an application in the aspect of UI/UX elements. In the sense of the present disclosure, UI elements can be understood as including control elements and layout elements presented on the user interface, wherein the control elements include, for example, buttons, menus, scroll bars, windows, sub-windows, search bars, tables, graphics, etc., and the layout elements represent, for example, layout positioning, interaction events, interface animations, transitions, etc. between the control elements. UX elements depend on the user experience of operating, which include, for example, elements related to the design of interactive modes with users.

In the UI/UX element conversion unit 10, the conceptual description model of the source application may be converted, for example, into a model related to realization of the in-vehicle platform. For instance, a developer statement, e.g. source code, of the UI/UX elements of the source application may be acquired first, which developer statement includes display attributes and logical attributes of the UI/UX elements. The display attributes include annotations about the style, size and/or layout of content elements in the in-vehicle platform, and the logical attributes include annotations about interactive logic of the content elements in the in-vehicle platform. After acquisition of the display attributes and logical attributes, rendering strategies may be determined, for example, with the help of a state machine: for instance, corresponding rendering strategies, such as shading, culling and mixing, are determined based on graphic display modes that are supported by the in-vehicle platform. Finally, according to the determined rendering strategies, a description document of the UI/UX elements in the in-vehicle platform is generated based on the display attributes and logical attributes, and web-based UI/UX elements that can be displayed in a browser are thus generated.

As an example, the developer statement of the application to be converted is "a button, which directs to another page when clicked", therefore, this developer statement is converted in the conversion unit into a corresponding button on the in-vehicle platform and a description document of the click event as well as corresponding web-based UI/UX elements, thereby completing the mapping from an abstract model to a model of the in-vehicle platform.

Apart from the display attributes and logic attributes, status attributes of the application and its content elements in the source platform may also be acquired in order to register an execution status of the application in the operating environment of the source platform and user historical preference data based on the status attributes, thereby allowing the converted application to be run in continuity with the registered status attributes in a target container created in the system layer of the in-vehicle platform.

In addition, the application conversion module 3 may further comprise an API (Application Programming Interface) call conversion unit 20. The API call conversion unit 20 can implement conversion in terms of API calls. For instance, a call to a source-platform-specific API of the application to be converted may be converted into a call to an in-vehicle platform API or to a platform-independent API. In this process, an access specific to system resources of the source platform is converted into an access to resources of the in-vehicle platform. For instance, API calls are changed to define GPS information return requests and photo album access requests, acquire incoming call interfaces, define the transmission manner of audios to the speaker, and acquire the mobile terminal unique code, etc., so that the way of accessing and calling resources and/or data is adapted to the use environment of the in-vehicle platform. As an example, when a navigation application is used on a smart phone platform, a native API for acquiring location information requests the return of positioning standards and positioning coordinates of the mobile terminal, but in the in-vehicle platform where usually only the national standards are supported, only the positioning coordinates are returned, while the positioning standards as the system default configuration will not be returned. Therefore, in the in-vehicle platform, for normal operation of the application, the API call conversion unit may supplement the positioning standard fields for the API, which are designated as the national standards.

By means of conversion and adaptation of API calls, interactive functions can be converted and adapted without the deep integration of the application with the in-vehicle platform at the operating system level, so that the difference in APIs are unperceivable from the perspective of application developers and end users. Taking the scanning function on the mobile terminal of the user as an example, the native API is configured to be allowed to access the camera of the user's mobile terminal; after conversion by the method according to the present disclosure, the new API may, for example, be allowed to request to use the front camera of the vehicle to shoot, save the captured image file to a predetermined storage location, analyze and read the image file through a predetermined event, and then execute the code for processing the image file. However, if the vehicle does not support cameras, an error message informing of the absence of a camera just as on the mobile phone will also be prompted.

In the in-vehicle platform, a browser and/or container technology and/or vehicle abstraction layer (VAS) is used as the converted application to call and/or access the in-vehicle platform APIs or the local resources and/or data of the in-vehicle platform, and/or to define the manner of communication with the underlying hardware devices or local resource data of the in-vehicle platform after the converted application is run on the in-vehicle platform, or is loaded to a container of the in-vehicle platform.

FIG. 1 further shows a (optional) download service module 4, which for example may be used for downloading an unconverted, a partially converted or converted application to the in-vehicle platform, and/or for deploying and/or installing the converted application to the in-vehicle platform. The download service module may also provide an operating environment for the downloaded applications, so that the application components can run properly in the environment of the in-vehicle platform and can call resources and/or data in the in-vehicle platform. The application conversion module 3 is connected to the download service module 4 in a manner capable of bidirectional communication. According to an embodiment of the present disclosure, in response to a request for application porting, source-platform-specific applications to be converted may be downloaded via the download service module 4 from the cloud server, such as the ecosystem cloud of the source platform, the app store of the original platform, or the vehicle cloud, and these source-platform-specific applications are then converted, by the application conversion module 3 for example, in order to be run in a non-deeply integrated manner on the in-vehicle platform side. According to another embodiment of the present disclosure, it is also possible to perform the cross-platform conversion of the application in advance to eliminate its dependency on a specific platform or operating system, and an installation package of the converted application may be stored at the server side or in the cloud, such as the ecosystem cloud of the source platform or the in-vehicle platform cloud; then, for instance, in response to the request or instruction from the user to download/install the corresponding application on the in-vehicle platform, the converted (cross-platform) application may be downloaded from the server or cloud, for example via the download service module 4 on the in-vehicle platform, and be installed and run in the in-vehicle platform. According to another embodiment of the present disclosure, the converted applications may also be deployed and/or installed in advance on the in-vehicle platform as pre-installed applications, which means there is no need for the user to download the applications from the server or cloud.

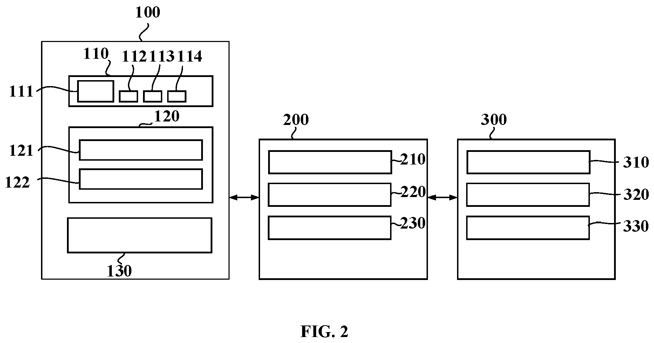

FIG. 2 shows a block diagram of a system for cross-platform porting of applications according to an exemplary embodiment of the present disclosure.

The system for cross-platform porting of applications comprises an in-vehicle platform 100, an in-vehicle platform cloud 200 and a source platform ecosystem cloud 300.

The application platform for running cross-platform applications is an in-vehicle platform. According to an embodiment of the present disclosure, the target platform for cross-platform porting of applications may further include other platforms, such as other mobile devices, or other operating systems different from the source platform, in other words, the platform on which the application is based before the porting or conversion. Referring to FIG. 2, the in-vehicle platform 100 is shown as a part of an in-vehicle system and it may comprise, for example, a user interface layer 110, a system layer 120 and an application interface layer 130.

The user interface layer 110 is used for, for example, implementing man-machine interaction with the user and presenting the user with visual graphic components in the form of a user interface (UI). For instance, a web-based user interface may be used so as to enable the display and interaction of the user interface of cross-platform (or platform-independent) applications. Here, the web-based user interface may comprise UI components based on web technologies, such as standard web elements in the form of html hypertext markup language, CSS or javascript, and the like. These web elements can run in a standard web browser or web view, thereby realizing the cross-platform feature or platform independence. For instance, most in-vehicle platforms or in-vehicle operating systems support web browsers or web views. As an example, a graphical element 111 of the app store and listing graphical elements 112, 113, 114 of the corresponding applications may be presented to the user via the user interface.

The system layer 120 is configured to be capable of interacting with the user interface layer 110. The system layer 120, has an application operating environment based on the container technology, so that it can be used as a virtualization solution allowing the application to be run on different in-vehicle platforms or underlying operating systems, such as on a Linux-based in-vehicle platform and an Android-based in-vehicle platform. The application running in the user interface layer 110 and/or the system layer 120 is an application that is cross-platform converted from a source-platform-specific application, which is a cross-platform application that can run in a manner independent of the underlying operating system for example. The system layer 120 comprises an application conversion module 121, which may have all or part of the functions of the application conversion module 3 in the embodiment shown in FIG. 1. The system layer 120 may further comprise an application management service module 122. The application management service module 122 is responsible for managing the life cycle of applications, for example, including download and/or installation, uninstallation and start, etc. The system layer 120 may also comprise a web server (web Content Server) module.

The application interface layer 130 may be coupled with the system layer 120 in a manner capable of signal transmission, and the application interface layer 130 provides, via API interfaces for example, the system layer 120 and/or the applications running therein with the access to local hardware and software resources, functions and/or data, such as underlying hardware and vehicle data, underlying the in-vehicle platform.

In addition to the in-vehicle platform 100, an in-vehicle platform cloud 200 and a source platform ecosystem cloud 300 are also shown in FIG. 2. In this embodiment, the in-vehicle platform cloud 200 is also abbreviated as vehicle cloud, which may be a cloud or background server provided by the automotive manufacturer and can directly communicate with the in-vehicle platform 100 to provide cloud services or background services for the vehicle system. An app store background module 210 and a corresponding application management service module 220 are provided in the vehicle cloud 200 for example. The application management service module 220 may manage applications, such as an application that can be run on the in-vehicle platform after cross-platform conversion, at the in-vehicle platform cloud, for example; and may be used for downloading applications from a third-party platform, such as the source platform ecosystem cloud 300, to the vehicle cloud, for example; and may also push an application to the in-vehicle platform, based on a request from the in-vehicle platform, to download an application, for example. In addition, alternatively, the vehicle cloud 200 may also comprise an application conversion module 230, which may have all or part of the functions of the application conversion module 3 in the embodiment shown in FIG. 1.

The source platform ecosystem cloud 300 may be, for example, a cloud or server of a third-party source platform-based application, and it provides an application package 310 based on the source platform different from the in-vehicle platform, which may be Android-based, quick application-based or applet-based based for example. In addition, the source platform ecosystem cloud 300 may comprise application development tools so that third-party application developers can develop various applications for the source platform ecosystem. Alternatively, the source platform ecosystem cloud 300 may further comprise an application conversion module 330, which may have all or part of the functions of the application conversion module 3 in the embodiment shown in FIG. 1.

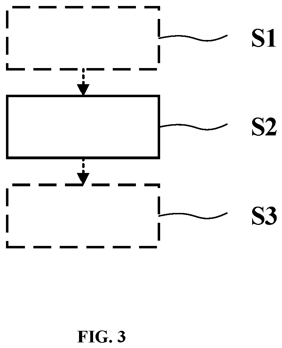

FIG. 3 shows a flowchart of a method for cross-platform porting of applications according to an exemplary embodiment of the present disclosure.

In an optional step S1, a request for application porting or conversion from a user and/or system may be received, for example, by means of the interface module 2 shown in FIG. 1. As an example, the user may trigger a request to install or use the application via a corresponding operation in a user interface (UI) provided in the in-vehicle platform, e.g. a vehicle system. Such an application request may be transmitted to the application conversion module 3 shown in FIG. 1.

In step S2, a source-platform-specific application is converted, for example via the application conversion module 3, into an application that can be run on an in-vehicle platform (as well as platforms or operating systems other than the source platform), so that the application can be run on the in-vehicle platform in a manner independent of the underlying operating system. The conversion of the application comprises converting a source-platform-specific user interface of the application to be converted into a web-based user interface; and converting a call to a source-platform-specific API of the application to be converted into a call to an in-vehicle platform API. The conversion of the application may be performed based on the request for porting or conversion, for example, as mentioned in step S1, or it may be performed in advance without being based on the request for porting or conversion.

According to an embodiment of the present disclosure, a step S3 may also be optionally included before or after step S2 of conversion. In this step S3, an application that is converted, yet to be converted, or partially converted may be downloaded/installed from the server or cloud to the in-vehicle platform, which means that the application can be run and used in the in-vehicle platform even if there is no connection to the network.

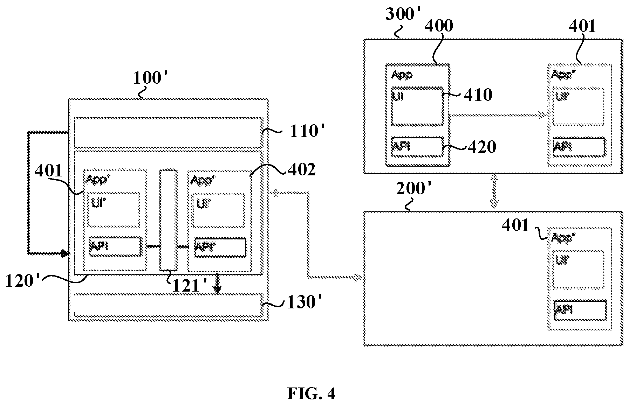

FIG. 4 shows a schematic diagram of porting an application to an in-vehicle platform by means of an exemplary embodiment of the method according to the present disclosure.

In the exemplary embodiment of FIG. 4, an in-vehicle platform 100' is shown. The cross-platform conversion of the application may be carried out in stages in the in-vehicle platform 100' and a source platform ecosystem cloud 300'. Here, the conversion of an application is carried out in two stages. In the first stage, the conversion of the user interface of the application is carried out in the source platform ecosystem cloud 300', where the user interface of a source-platform-specific application is converted into a web-based user interface, for example, the UI/UX elements of a source-platform-specific native application 400 are converted into web technology-based UI/UX elements, thereby forming a partially converted (user interface converted) application 401. Then, this partially converted application 401 is downloaded from the source platform ecosystem cloud 300' to a vehicle cloud 200'. Next, the in-vehicle platform 100' may download the partially converted application 401 to the local vehicle, i.e. the in-vehicle platform 100', for example via a corresponding application management service module, so as to perform the second-stage conversion there. In the in-vehicle platform 100', the second-stage conversion, i.e. the conversion of API calls, of the application 401 may be performed, for example via an application conversion module 121' in a system layer 120', where a source-platform-specific native API call is converted into an in-vehicle platform API call, thereby allowing the converted application to access the local resources, functions and/or data, etc. of the in-vehicle platform in this embodiment. The application with the converted user interface and the converted API call can be run on the in-vehicle platform, for example, based on web and/or container technologies, and is allowed to access the local resources, functions and/or data, etc. of the in-vehicle platform via an application interface layer 130', for example.

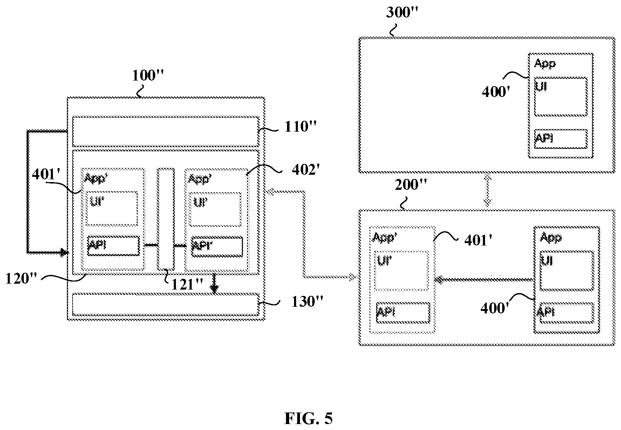

FIG. 5 shows a schematic diagram of porting an application to an in-vehicle platform by means of another exemplary embodiment of the method according to the present disclosure.

In the exemplary embodiment of FIG. 5, an in-vehicle platform 100" is shown. The cross-platform conversion of the application may be performed in stages in the in-vehicle platform 100" and a vehicle cloud 200". Here, the conversion of an application is also divided into two stages. However, unlike the embodiment shown in FIG. 4, the conversion of the application is no longer performed at a source platform ecosystem cloud 300", or the source platform side; instead, it is performed completely at the in-vehicle platform side or the vehicle cloud, and an advantage of doing so is that the security of vehicle data resources can be better protected.

In this embodiment, an application 400' expected to be ported is first downloaded from the source platform side, e.g. the source platform ecosystem cloud 300", to the vehicle cloud 200". Then, the conversion of the user interface of the application is carried out in the vehicle cloud 200", where the user interface of the source-platform-specific application is converted into a web-based user interface, for example, the UI/UX elements of the source-platform-specific native application 400' are converted into web technology-based UI/UX elements, thereby forming a partially converted (user interface converted) application 401'. Next, this partially converted application 401' may be downloaded from the vehicle cloud 200" to the in-vehicle platform 100". In the in-vehicle platform, the second-stage conversion, i.e. the conversion of API calls, of the application 401' may be performed, for example via a conversion module 121" in a system layer 120", where a call to a source-platform-specific API is converted into a call to an in-vehicle platform API, thereby allowing the converted application to access the local resources, functions and/or data, etc. of the in-vehicle platform. The application with the converted user interface and the converted API call can be run on the in-vehicle platform, for example, based on web and/or container technologies, and is allowed to access the local resources, functions and/or data, etc. of the in-vehicle platform via an application interface layer 130", for example.

According to different embodiments of the present disclosure, both the conversion of the user interface and the conversion of the API call of the application conversion may be performed at one of the in-vehicle platform side, an in-vehicle platform cloud side and the source platform side, e.g. the source platform ecosystem cloud, or they may be performed in stages at two of the in-vehicle platform side, the in-vehicle platform cloud side and the source platform side, e.g. the source platform ecosystem cloud, respectively.

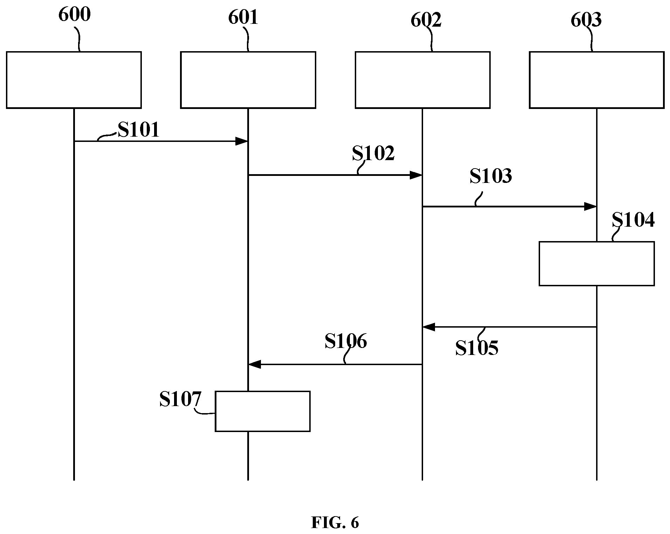

FIG. 6 shows a sequence diagram of executing a method for cross-platform porting of applications according to an exemplary embodiment of the present disclosure.

Referring to FIG. 6, shown at the top are various nodes or entities involved: a user 600, an in-vehicle platform 601 (which is a vehicle in this embodiment), an in-vehicle platform cloud 602 (which is a vehicle cloud in this embodiment), and a source platform system ecological cloud 603. According to different embodiments of the present disclosure: a conversion module for cross-platform porting of applications according to the present disclosure may be arranged on one or more of the vehicle 601, the vehicle cloud 602 and the source platform system ecological cloud 603. In step S101, the user 600 for example triggers a request to download and/or install an application on an in-vehicle platform provided by the vehicle 601 through an appropriate interactive operation. In step S102, the request for application downloading and/or installation is sent by the vehicle 601 to the vehicle cloud 602. Then, in step S103, the vehicle cloud 602 judges whether in its server there is an installation package of the application requested by the user to be downloaded (for example, the installation package of an application that can be run on a target in-vehicle platform after it is converted in advance from a source-platform-specific application by means of the method for cross-platform porting of applications/conversion according to the present disclosure), and if there is, the installation package is returned to the vehicle 601 directly; if not, the request for downloading the installation package of the application may be forwarded by the vehicle cloud 602 to the source platform system ecological cloud 603 in step S103.

According to one embodiment of the present disclosure, in an optional step S104, the source-platform-specific application may be converted into an installation package of the application that can run in the target in-vehicle platform in the source platform system ecological cloud 603, for example, by means of a conversion module arranged therein; in step S105, the converted installation package of the application is downloaded to the vehicle cloud 601, and in step S106, it is further downloaded to the local vehicle 601. Finally, in step S107, the installation and operation of the application in the vehicle 601 is completed.

According to another embodiment of the present disclosure, the cross-platform conversion of the application may not be performed in the source platform system ecological cloud 603; instead, the unconverted source-platform-specific application is downloaded to the vehicle cloud 602 in step S105, and then it is converted at the vehicle cloud into an application that can run in the target in-vehicle platform.

Alternatively, as mentioned above, the conversion of the user interface and the conversion of the API call of the application conversion may be performed in stages at two of the in-vehicle platform side, the in-vehicle platform cloud side or the source platform side, e.g. the source platform ecosystem cloud, respectively.

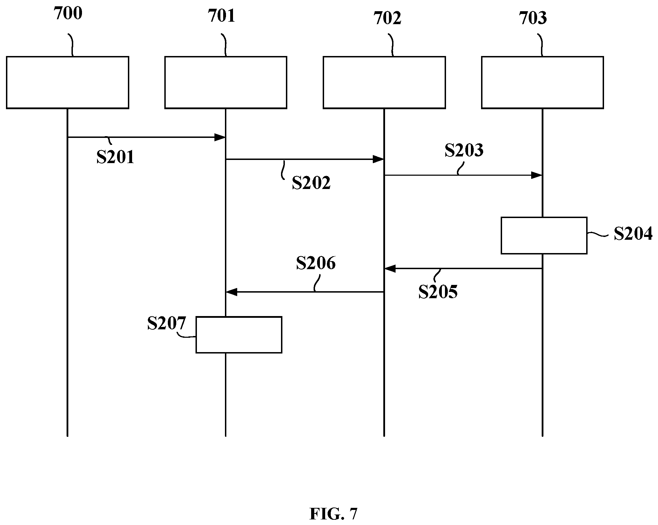

FIG. 7 shows another signal sequence diagram during executing a method for cross-platform porting of applications according to the present disclosure.

Here, shown at the top are likewise various nodes or entities involved: a user 700, an in-vehicle platform (which is a vehicle 701 in this embodiment), an in-vehicle platform cloud 702 (which is a vehicle cloud in this embodiment), and a source platform system ecological cloud 703. According to different embodiments of the present disclosure: a conversion module for cross-platform porting of applications according to the present disclosure may be arranged on one or more of the vehicle 701, the vehicle cloud 702 and the source platform system ecological cloud 703.

In step S201, the user 700 triggers a request to use an application on the in-vehicle platform provided by the vehicle 701 for the first time through an interactive operation. In response to this, detection of updates, request for updates, cross-platform conversion of the updated data package, downloading of the updated data package, preparation of runtime data, and start of the application are performed in sequence in steps S202 to S207. The conversion of the application is the same as the first downloading and installation process shown in FIG. 6 up to step S206. However, for the preparation of runtime data in step S207, conversion at the vehicle 701 locally may additionally be involved, which comprises, for example, updating authorization information of the application (in order to ensure the security of vehicle data and/or functions).

## Claims

1. A method for cross-platform porting of applications, the method comprising:
converting a source-platform-specific application (400) into an application that can be run on an in-vehicle platform (100),
wherein the conversion comprises:
converting (S2) a source-platform-specific user interface of the application (400) to be converted into a web-based user interface;converting (S2) a call to a source-platform-specific API of the application (400) to be converted into a call to an in-vehicle platform API,
**characterized in that**,
the source-platform-specific application (400) is an application developed for a non-vehicle platform and for a specific operating system and is dependent on a specific operating system, and the converted application runs on the in-vehicle platform (100) in an operating system-independent manner;
the application that has undergone the user interface conversion and API call conversion runs as a web technology-based application within a container-based operating environment of the in-vehicle platform (100);
the API call is converted in the following way: the converted application accesses the local resources, functions and/or data of the vehicle platform through application interface layer (130), and the application interface layer (130) provides the converted application with access to the local software and hardware resources, functions and/or data underlying the vehicle platform through API interface.

2. The method according to claim 1, wherein the method further comprises downloading (S3), deploying and/or installing the converted application to the in-vehicle platform (100)

3. The method according to claim 1 or 2, wherein the conversion of the user interface comprises conversion of the application (400) in the aspect of UI/UX elements, and wherein a conceptual description model of the application (400) is converted into a model related to realization of the in-vehicle platform (100).

4. The method according to any one of claims 1 to 3, wherein the conversion of the user interface comprises:
acquiring a developer statement of the UI/UX elements of the application, which developer statement includes display attributes and logical attributes of the UI/UX elements, wherein the display attributes in particular include annotations about the style, size and/or layout of the UI/UX elements in the in-vehicle platform (100), and the logical attributes in particular include annotations about interactive logic of the UI/UX elements in the in-vehicle platform (100);
determining rendering strategies; and
generating web-based UI/UX elements based on the display attributes and the logical attributes according to the rendering strategies.

5. The method according to any one of claims 1 to 4, wherein both the conversion of the user interface and the conversion of the API call of the application conversion are performed at one of the in-vehicle platform (100) side, an in-vehicle platform cloud (200) side and the source platform side, or are performed in stages at two of the in-vehicle (100) side, the in-vehicle platform cloud (200) side and the source platform side respectively; preferably, the conversion of the API call is performed at the in-vehicle platform cloud (200) side or the in-vehicle platform (100) side, in particular at the in-vehicle platform (100) locally.

6. The method according to any one of claims 1 to 5, wherein the method further comprises:
receiving a request for application porting or conversion,
converting a source-platform-specific application (400) into an application that can be run on the in-vehicle platform (100) in response to the request for application porting or conversion.

7. The method according to claim 6, wherein the request for application porting or conversion is initiated in response to a user-initiated request to download and/or install an application on the in-vehicle platform (100) and/or a user-initiated request to use an application on the in-vehicle platform (100) for the first time, or is initiated by the system.

8. The method according to any one of claims 1 to 5, wherein the conversion of the application (400) is performed in advance without being based on a request for porting or conversion.

9. A device for cross-platform porting of applications, said device being configured to perform the method according to any one of claims 1 to 8.

10. An application platform, in particular an in-vehicle platform (100), said application platform comprising: a user interface layer (110), a system layer (120) and an application interface layer (130); wherein the application platform is configured to run applications that are converted by means of the method according to any one of claims 1 to 8.

11. The application platform according to claim 10, **characterized in that** the application platform comprises the device according to claim 9.

12. An in-vehicle system, comprising the device according to claim 9 and/or the application platform according to claim 10 or 11.

13. A system for cross-platform porting of applications, the system comprising an in-vehicle platform (100), an in-vehicle platform cloud (200) and a source platform ecosystem cloud (300), wherein the system is configured to perform the method according to any one of claims 1 to 8.

14. A machine-readable program carrier storing a computer program which, when executed on a computer, performs the method according to any one of claims 1 to 8.

## Patentansprüche

1. Verfahren zur plattformübergreifenden Portierung von Anwendungen, wobei das Verfahren umfasst:
das Konvertieren einer für die Quellplattform spezifischen Anwendung (400) in eine Anwendung, die auf einer Fahrzeugplattform (100) ausgeführt werden kann,
wobei die Konvertierung Folgendes umfasst:
die Umwandlung (S2) einer für die Quellplattform spezifischen Benutzeroberfläche der umzuwandelnden Anwendung (400) in eine webbasierte Benutzeroberfläche; die Umwandlung (S2) eines Aufrufs einer für die Quellplattform spezifischen API der umzuwandelnden Anwendung (400) in einen Aufruf einer API der Fahrzeugplattform,
**dadurch gekennzeichnet, dass**
die quellplattformspezifische Anwendung (400) eine für eine Nicht-FahrzeugPlattform und für ein bestimmtes Betriebssystem entwickelte Anwendung ist und von einem bestimmten Betriebssystem abhängig ist, und die konvertierte Anwendung auf der Fahrzeugplattform (100) betriebssystemunabhängig läuft;
die Anwendung, die der Konvertierung der Benutzeroberfläche und der API-Aufrufe unterzogen wurde, läuft auf Basis von Webtechnologie in einer containerbasierten Betriebsumgebung der Fahrzeugplattform (100);
Der API-Aufruf wird wie folgt konvertiert: Die konvertierte Anwendung greift über die Anwendungsschnittstellenschicht (130) auf die lokalen Ressourcen, Funktionen und/oder Daten der Fahrzeugplattform zu, und die Anwendungsschnittstellenschicht (130) gewährt der konvertierten Anwendung über eine API-Schnittstelle Zugriff auf die der Fahrzeugplattform zugrunde liegenden lokalen Software- und Hardware-Ressourcen, Funktionen und/oder Daten.

2. Verfahren nach Anspruch 1, wobei das Verfahren ferner das Herunterladen (S3), Bereitstellen und/oder Installieren der konvertierten Anwendung auf der Fahrzeugplattform (100) umfasst.

3. Verfahren nach Anspruch 1 oder 2, wobei die Konvertierung der Benutzeroberfläche die Konvertierung der Anwendung (400) hinsichtlich UI/UX-Elementen umfasst und wobei ein konzeptionelles Beschreibungsmodell der Anwendung (400) in ein Modell konvertiert wird, das sich auf die Realisierung der Fahrzeugplattform (100) bezieht.

4. Verfahren nach einem der Ansprüche 1 bis 3, wobei die Konvertierung der Benutzeroberfläche umfasst:
das Erfassen einer Entwicklerangabe zu den UI/UX-Elementen der Anwendung, wobei die Entwicklerangabe Anzeigeattribute und logische Attribute der UI/UX-Elemente umfasst, wobei die Anzeigeattribute insbesondere Anmerkungen zum Stil, zur Größe und/oder zum Layout der UI/UX-Elemente in der Fahrzeugplattform (100) umfassen, und die logischen Attribute insbesondere Anmerkungen zur interaktiven Logik der UI/UX-Elemente in der Fahrzeugplattform (100) umfassen;
Festlegen von Darstellungsstrategien; und
Erzeugen von webbasierten UI/UX-Elementen auf der Grundlage der Darstellungsattribute und der logischen Attribute gemäß den Darstellungsstrategien.

5. Verfahren nach einem der Ansprüche 1 bis 4, wobei sowohl die Konvertierung der Benutzeroberfläche als auch die Konvertierung des API-Aufrufs im Rahmen der Anwendungskonvertierung entweder auf der Seite der Fahrzeugplattform (100), der Fahrzeugplattform-Cloud (200) oder der Quellplattform durchgeführt werden oder schrittweise auf zwei der folgenden Seiten erfolgen: der Seite der Fahrzeugplattform (100), der Seite der Fahrzeugplattform-Cloud (200) und der Seite der Quellplattform jeweils schrittweise durchgeführt werden; vorzugsweise wird die Konvertierung des API-Aufrufs auf der Seite der Fahrzeugplattform-Cloud (200) oder auf der Seite der Fahrzeugplattform, insbesondere lokal auf der Fahrzeugplattform (100), durchgeführt.

6. Verfahren nach einem der Ansprüche 1 bis 5, wobei das Verfahren ferner umfasst:
Empfangen einer Anforderung zur Anwendungsportierung oder -konvertierung,
Konvertieren einer für die Quellplattform spezifischen Anwendung (400) in eine Anwendung, die auf der Fahrzeugplattform (100) ausgeführt werden kann, als Reaktion auf die Anforderung zur Anwendungsportierung oder -konvertierung.

7. Verfahren nach Anspruch 6, wobei die Anforderung zur Portierung oder Konvertierung einer Anwendung als Reaktion auf eine vom Benutzer ausgelöste Anforderung zum Herunterladen und/oder Installieren einer Anwendung auf der Fahrzeugplattform (100) und/oder eine vom Benutzer ausgelöste Anforderung zur erstmaligen Nutzung einer Anwendung auf der Fahrzeugplattform (100) ausgelöst wird oder vom System ausgelöst wird.

8. Verfahren nach einem der Ansprüche 1 bis 5, wobei die Konvertierung der Anwendung (400) im Voraus durchgeführt wird, ohne dass sie auf einer Anforderung zur Portierung oder Konvertierung beruht.

9. Einrichtung zur plattformübergreifenden Portierung von Anwendungen, wobei die Einrichtung so konfiguriert ist, dass sie das Verfahren gemäß einem der Ansprüche 1 bis 8 ausführt.

10. Anwendungsplattform, insbesondere eine Fahrzeugplattform (100), wobei die Anwendungsplattform umfasst: eine Benutzerschnittstellenschicht (110), eine Systemschicht (120) und eine Anwendungsschnittstellenschicht (130); wobei die Anwendungsplattform so konfiguriert ist, dass sie Anwendungen ausführt, die mittels des Verfahrens gemäß einem der Ansprüche 1 bis 8 konvertiert wurden.

11. Anwendungsplattform nach Anspruch 10, **dadurch gekennzeichnet, dass** die Anwendungsplattform die Einrichtung nach Anspruch 9 umfasst.

12. Fahrzeugsystem, das die Einrichtung gemäß Anspruch 9 und/oder die Anwendungsplattform gemäß Anspruch 10 oder 11 umfasst.

13. System zur plattformübergreifenden Portierung von Anwendungen, wobei das System eine Fahrzeugplattform (100), eine Fahrzeugplattform-Cloud (200) und eine Quellplattform-Ökosystem-Cloud (300) umfasst, wobei das System so konfiguriert ist, dass es das Verfahren gemäß einem der Ansprüche 1 bis 8 ausführt.

14. Maschinenlesbarer Programmträger, auf dem ein Computerprogramm gespeichert ist, das bei Ausführung auf einem Computer das Verfahren gemäß einem der Ansprüche 1 bis 8 ausführt.

## Revendications

1. Procédé de portage d'applications inter-plate-forme, le procédé comportant :
convertir une application spécifique à une plate-forme source (400) en une application qui peut être exécutée sur une plate-forme embarquée (100),
la conversion comportant :
convertir (S2) une interface utilisateur spécifique à une plate-forme source de l'application (400) à convertir en une interface utilisateur du web ; convertir (S2) un appel d'une API spécifique à une plate-forme source de l'application (400) à convertir en un appel d'une API de plate-forme embarquée,
**caractérisé en ce que**
l'application spécifique à une plate-forme source (400) est une application développée pour une plate-forme non embarquée et pour un système d'exploitation spécifique et est dépendante d'un système d'exploitation spécifique, et l'application convertie s'exécute sur la plate-forme embarquée (100) d'une manière indépendante du système d'exploitation ;
l'application qui a subi la conversion d'interface utilisateur et la conversion d'appel d'API s'exécute comme une application basée sur la technologie web au sein d'un environnement d'exploitation à base de conteneurs de la plate-forme embarquée (100) ;
l'appel d'API est converti de la manière suivante : l'application convertie accède aux ressources, fonctions et/ou données locales de la plate-forme embarquée via une couche d'interface d'application (130), et la couche d'interface d'application (130) fournit à l'application convertie un accès aux ressources logicielles et matérielles, fonctions et/ou données locales sous-jacentes à la plate-forme embarquée via l'interface API.

2. Procédé selon la revendication 1, dans lequel le procédé comporte en outre de télécharger (S3), déployer et/ou installer l'application convertie vers la plate-forme embarquée (100).

3. Procédé selon la revendication 1 ou 2, dans lequel la conversion de l'interface utilisateur comporte la conversion de l'application (400) sous forme d'éléments UI/UX, et un modèle de description conceptuelle de l'application (400) étant converti en un modèle lié à la réalisation de la plate-forme embarquée (100).

4. Procédé selon l'une quelconque des revendications 1 à 3, dans lequel la conversion de l'interface utilisateur comporte :
acquérir une instruction de développeur sur les éléments UI/UX de l'application, laquelle instruction de développeur comprend des attributs d'affichage et des attributs logiques des éléments UI/UX, les attributs d'affichage comprenant en particulier des annotations concernant le style, la taille et/ou la disposition des éléments UI/UX dans la plate-forme embarquée (100), et les attributs logiques comprenant en particulier des annotations concernant la logique interactive des éléments UI/UX dans la plate-forme embarquée (100) ;
déterminer des stratégies de rendu ; et
générer des éléments UI/UX du web basés sur les attributs d'affichage et les attributs logiques en fonction des stratégies de rendu.

5. Procédé selon l'une quelconque des revendications 1 à 4, dans lequel la conversion de l'interface utilisateur et la conversion de l'appel d'API de la conversion d'application sont toutes deux réalisées d'un côté parmi le côté de la plate-forme embarquée (100), le côté de nuage de la plate-forme embarquée (200) et le côté de la plate-forme source, ou sont réalisées par étapes de deux côtés parmi le côté de la plate-forme embarquée (100), le côté de nuage de la plate-forme embarquée (200) et le côté de la plate-forme source, respectivement ; de préférence, la conversion de l'appel d'API est effectuée du côté nuage de plate-forme embarquée (200) ou du côté de la plate-forme embarquée (100), en particulier localement sur la plate-forme embarquée (100).

6. Procédé selon l'une quelconque des revendications 1 à 5, dans lequel le procédé comporte en outre :
recevoir une requête de portage ou de conversion d'application,
convertir une application spécifique à une plate-forme source (400) en une application qui peut être exécutée sur la plate-forme embarquée (100) en réponse à la requête de portage ou de conversion d'application.

7. Procédé selon la revendication 6, dans lequel la requête de portage ou de conversion d'applications est initiée en réponse à une requête initiée par un utilisateur pour télécharger et/ou installer une application sur la plate-forme embarquée (100) et/ou à une requête initiée par un utilisateur pour utiliser une application sur la plate-forme embarquée (100) pour la première fois, ou est initiée par le système.

8. Procédé selon l'une quelconque des revendications 1 à 5, dans lequel la conversion de l'application (400) est effectuée à l'avance sans être basée sur une requête de portage ou de conversion.

9. Dispositif de portage d'applications inter-plate-forme, ledit dispositif étant configuré pour mettre en œuvre le procédé selon l'une quelconque des revendications 1 à 8.

10. Plate-forme d'applications, en particulier une plate-forme embarquée (100), ladite plate-forme d'applications comportant : une couche d'interface utilisateur (110), une couche de système (120) et une couche d'interface d'application (130) ; dans laquelle la plate-forme d'application est configurée pour exécuter des applications qui sont converties au moyen du procédé selon l'une quelconque des revendications 1 à 8.

11. Plate-forme d'applications selon la revendication 10, **caractérisée en ce que** la plate-forme d'applications comporte le dispositif selon la revendication 9.

12. Système embarqué, comportant le dispositif selon la revendication 9 et/ou la plate-forme d'applications selon la revendication 10 ou 11.

13. Système de portage d'applications inter-plate-forme, le système comportant une plate-forme embarquée (100), un nuage de plate-forme embarquée (200) et un nuage d'écosystème de plate-forme source (300), dans lequel le système est configuré pour mettre en œuvre le procédé selon l'une quelconque des revendications 1 à 8.

14. Support de programme lisible par machine stockant un programme informatique qui, lorsqu'il est exécuté sur un ordinateur, met en œuvre le procédé selon l'une quelconque des revendications 1 à 8.
